# EUROPEAN PATENT APPLICATION

(11) **EP 4 779 586 A1**
(43) Date of publication of application: **22.07.2026**
(21) Application number: 26150534.1
(22) Date of filing: 07.01.2026
(51) Int. Cl.: G06V 10/82, G06V 20/69

(54) **A MACHINE LEARNING SYSTEM AND METHOD FOR REAL-TIME IMAGE-BASED ANATOMY SEGMENTATION**

(30) Priority: 20.01.2025 US 202563747284 P; 27.01.2025 US 202519037515
(71) Applicant: Robotron Technologies Inc., Miami, Florida 33133 (US)
(72) Inventor: SIEMIONOW, Krzysztof, Miami, FL 33133 (US)
(74) Representative: Kancelaria Eupatent.pl Sp. z o.o.

(57) **Abstract**

A method for real-time surgical navigation, including: capturing an intraoperative image stream from a distal portion of an endoscopic instrument inserted into a patient's body; processing the intraoperative image stream with a machine learning-based segmentation algorithm configured to identify anatomical structures; and outputting segmentation data indicating the anatomical structures within the image stream.

## Description

### TECHNICAL FIELD

The present invention relates generally to machine learning systems and methods for performing real-time segmentation of anatomy based on images obtained from a camera of an endoscopic instrument.

### BACKGROUND

Endoscopic techniques have played a transformative role in modern medicine, offering minimally invasive access to a variety of anatomical regions. By threading a small camera-equipped instrument into the body, clinicians can visualize tissues and structures without the extensive dissections required in traditional open procedures. Despite these advantages, the utility of endoscopy in certain domains has been limited by technical constraints and insufficient real-time feedback, particularly in surgeries requiring detailed access to tight, complex spaces.

One such domain is spinal surgery. Traditionally, surgeons rely on magnification tools such as operating microscopes or head-mounted loupes, often coupled with a headlight to illuminate the surgical field. While this equipment can enhance visibility in straightforward cases, it proves less effective for deep or angled regions. In fact, these magnification systems, much like rigid endoscopes, cannot easily provide detailed views "around corners" or through narrow canals within the spinal column, such as the neuroforamina. As a result, critical steps are frequently performed by feel rather than by direct visualization.

This lack of clear vision in challenging areas poses significant risks and uncertainties. Surgeons are sometimes compelled to perform tissue removal "blindly," increasing the likelihood of accidental damage to nerves or other sensitive structures. Their two-dimensional views offer no direct insight into soft tissue morphology or the detailed anatomy behind bony overhangs. Rigid endoscopic cameras, while an improvement over direct line-of-sight tools, often remain too bulky to navigate effectively within the spinal canal and still cannot visualize tissue hidden by bony contours.

Furthermore, the recent introduction of machine learning-based methods for image segmentation has shown promise in enhancing intraoperative visualization. However, these methods face unique obstacles when applied to real-time endoscopic surgery. Most deep learning segmentation models are computationally intensive, requiring substantial memory and processing power typically found in offline settings such as radiological image analysis. Transferring this technology to the operating room poses several challenges. Surgical workflows demand immediate feedback; delays of even a fraction of a second can disrupt the surgeon's motions and compromise patient safety. Deep convolutional neural networks require heavy computation, often making it difficult to achieve and maintain real-time frame rates. Furthermore, many endoscopic settings rely on compact or mobile computing units with limited GPU resources. These hardware constraints make it challenging to run large, state-of-the-art neural networks at a sufficient speed to support continuous endoscopic video streams. Moreover, endoscopic views frequently suffer from dynamic lighting, fluid or blood obscuration, partial occlusions by tissue or instruments, and rapid viewpoint changes. A neural network must be robust enough to handle these variations without losing segmentation accuracy. Finally, endoscopic cameras, particularly those designed for narrow surgical corridors, often run at relatively low resolution or reduced field of view. Neural networks must therefore be trained and optimized to preserve segmentation quality in the face of fewer pixels and wide fluctuations in surgical scene geometry.

Surgeons also currently lack quantitative metrics for determining how much bone should be removed for decompression or how to correlate preoperative MRI findings with real-time intraoperative landscapes. Accurate, real-time machine learning segmentation could bridge this gap by highlighting critical structures, offering depth or volumetric measurements, and integrating with robotic systems for semi-autonomous movement.

Yet, without efficient neural network architectures, high-speed processing, and robust handling of complex and changing surgical visuals, conventional endoscopic and imaging approaches fall short in providing the continuous, data-driven guidance necessary to enhance patient outcomes. The present invention seeks to address these needs.

### SUMMARY

The present invention provides a machine learning-based approach to real-time anatomical segmentation of endoscopic images, addressing the aforementioned challenges in minimally invasive procedures. By leveraging neural network architectures capable of rapid feature extraction and pixel-wise classification, the disclosed system enables clinicians or autonomous robotic platforms to visualize hidden or partially obscured structures accurately. This real-time capability reduces reliance on manual palpation and "blind" maneuvers, thereby decreasing the risk of injury and enabling more precise control of surgical instruments.

Another advantage of the invention lies in its adaptability and scalability. The machine learning module can be trained or retrained on varied datasets that include real endoscopic footage as well as synthetic or model-derived images. Such adaptability fosters incremental improvements to the segmentation accuracy as more intraoperative data are gathered, ultimately enhancing clinical outcomes over time. Further, the integration with stereoscopic imaging, robotic control, and user-friendly overlays makes this system highly versatile for different surgical applications. For instance, in laparoscopic abdominal surgery, the same machine learning segmentation pipeline can distinguish organs, blood vessels, and other structures to guide surgical maneuvers. Consequently, clinicians benefit from a more intuitive and informed operative workflow, with immediate and precise identification of delicate tissue planes and critical structures.

In one aspect of the invention, there is provided a method for real-time surgical navigation, comprising: capturing an intraoperative image stream from a distal portion of an endoscopic instrument inserted into a patient's body; processing the intraoperative image stream with a machine learning-based segmentation algorithm configured to identify anatomical structures; and outputting segmentation data indicating the anatomical structures within the image stream. This allows rapid and accurate visualization of surgical anatomy in real-time. Therefore, it is possible to enhance the surgeon's spatial awareness during procedures. Such a configuration provides a foundation for improving safety and efficiency in minimally invasive interventions.

In a preferred embodiment, the method further comprises using an encoder-decoder neural network as the machine learning-based segmentation algorithm, wherein the encoder portion extracts feature maps from each image frame and the decoder portion reconstructs a segmented output identifying specific anatomy structures. This allows a multi-stage feature extraction and reconstruction process to be efficiently applied frame-by-frame. Therefore, it is possible to achieve robust segmentation even under variable lighting and viewpoint conditions. Such a configuration provides high accuracy in delineating critical anatomical structures.

In another preferred embodiment, the method includes employing an atrous spatial pyramid pooling module in the encoder portion, configured to capture multi-scale contextual information by applying dilated convolutions at different rates. This allows the network to identify both fine details and broader anatomical context simultaneously. Therefore, it is possible to handle variations in tissue appearance or depth. Such a configuration provides improved segmentation accuracy in complex surgical fields.

In yet another preferred embodiment, the method includes the use of skip connections between corresponding layers of the encoder and decoder portions to preserve high-resolution spatial features and improve boundary delineation of anatomical structures. This allows seamless transfer of lower-level image details to higher processing layers. Therefore, it is possible to maintain precise borders and reduce segmentation errors. Such a configuration provides clearer differentiation between closely adjacent tissues.

In a further preferred embodiment, the decoder portion of the encoder-decoder neural network comprises a first upsampling block that restores feature map resolution to fraction of the original input image size, and a second upsampling block that restores the feature map resolution to the original input image size, enabling real-time segmentation of low-resolution frames without significant loss of detail. This allows the system to balance computational efficiency with accuracy. Therefore, it is possible to perform segmentation at high frame rates. Such a configuration provides responsive, near-instantaneous feedback to clinicians.

In another preferred embodiment, the method employs a multi-stage dataset allocation scheme during training of the encoder-decoder neural network, wherein consecutive frames from stationary endoscopic views are grouped into segments, and each segment is exclusively assigned to either training, validation or testing. This allows effective avoidance of "data leakage" and overfitting. Because of testing on data that was not seen during training, it is possible to enhance the reliability of performance metrics. Such a configuration provides a more robust and generalizable segmentation model.

In a further preferred embodiment, the method includes configuring the encoder-decoder neural network to accept paired stereoscopic images as input in a batched manner, leveraging shared model weights for simultaneous segmentation of both images. This allows depth-awareness to be incorporated without significantly increasing computational overhead. Therefore, it is possible to generate more accurate spatial understanding of the operative field. Such a configuration provides enhanced precision in detecting and locating vital structures.

In another preferred embodiment, the method further comprises acquiring stereoscopic image data from two cameras located at the distal portion of the endoscopic instrument and using said stereoscopic image data to estimate a depth map of the operative field. This allows enhanced 3D perception and therefore improves surgical navigation in confined or geometrically complex spaces.

In a further preferred embodiment, the method includes using the depth map to measure at least one of: a distance between the endoscopic instrument and a selected anatomical landmark, an angle or orientation of the endoscopic instrument relative to the anatomy, or a real-time volume of an anatomical region. Therefore, it is possible to make quantitative assessments in real time, thereby facilitating precise surgical planning and execution.

In another preferred embodiment, the method further comprises controlling, via a robotic manipulator, the position or orientation of the endoscopic instrument in response to the navigational data, thereby enabling semi-autonomous or autonomous navigation within the patient's anatomy. This allows reduced manual workload and consistent motion control, thereby minimizing potential surgical errors.

In another preferred embodiment, the method comprises storing segmented frames for post-operative review, wherein said stored data are used to retrain the machine learning-based segmentation algorithm. Such configuration provides an adaptive learning loop, making it possible to continuously enhance segmentation accuracy and system performance over time.

In another preferred embodiment, the method further comprises displaying a color-coded overlay of identified anatomical structures on a monitor or head-mounted display to provide real-time visual feedback to a surgeon or operator. Such configuration provides immediate recognition of critical anatomy, thereby improving procedural awareness and reducing surgical risk.

In a further preferred embodiment, the endoscopic instrument comprises a surgical tool selected from the group consisting of a dissector, nerve hook, rongeur, scissors, or ball probe. This allows both visualization and manipulation through a single device, therefore enhancing efficiency and control during the procedure.

In another preferred embodiment, the machine learning model is trained on a dataset combining real surgical images and synthetic images obtained from physical or semisyntetic 3D-printed anatomical models. This configuration provides a diverse training foundation, making it possible to achieve more robust tissue recognition across varied intraoperative scenarios.

In another aspect, there is provided a system for real-time surgical navigation, comprising: an endoscopic instrument having a distal portion configured to capture an intraoperative image stream via an imaging module; a computing device including one or more processors, memory, and optionally a graphics processing unit; a machine learning-based segmentation module stored in the memory and adapted to identify anatomical structures in the intraoperative image stream; and an output interface that provides segmentation data indicating the anatomical structures within the image stream. This allows a fully integrated hardware-software platform capable of high-speed anatomical segmentation. Therefore, it is possible to deploy real-time guidance in a clinical environment. Such a configuration provides a comprehensive solution for image-based surgery.

In a preferred embodiment, the system comprises two cameras at the distal portion of the endoscopic instrument for stereoscopic imaging, enabling the computing device to estimate a depth map of the operative field. Therefore, it is possible to perceive three-dimensional relationships in confined anatomical corridors, thus improving accuracy in surgical maneuvers.

In another preferred embodiment, the system further includes a robotic manipulator communicatively coupled to the computing device, wherein the model matching module provides location and orientation data for semi-autonomous or autonomous positioning of the endoscopic instrument. This allows coordinated and precise movements under automated control, thereby reducing operator fatigue and potential human error.

In a further preferred embodiment, the system incorporates an encoder-decoder neural network as the machine learning-based segmentation module. Such configuration provides efficient and real-time segmentation, therefore maintaining continuous tissue identification even under challenging conditions.

In another preferred embodiment, the system further comprises a user interface module adapted to display a real-time overlay of segmented anatomical structures on a visualization module and to output navigational prompts or warnings. This allows immediate intraoperative feedback, thereby enhancing situational awareness and supporting safer surgical actions.

In another preferred embodiment, the system comprises a training and update engine configured to store intraoperative image data and segmentation results, and to retrain or fine-tune the machine learning-based segmentation module based on post-operative or offline analysis. This allows continuous improvement of the system's algorithms over multiple procedures, thus advancing surgical efficacy and safety outcomes.

These and other features, aspects and advantages will become better understood with reference to the following drawings, descriptions and claims.

### BRIEF DESCRIPTION OF THE DRAWINGS

Various embodiments are herein described, by way of example only, with reference to the accompanying drawings, wherein:
FIG. 1 illustrates an endoscopic instrument in accordance with one embodiment.
FIG. 2A provides a hardware-level block diagram of the system architecture in accordance with one embodiment.
FIG. 2B depicts a functional diagram of the software components in accordance with one embodiment.
FIG. 3A shows an example of an intraoperative endoscopic image frame before segmentation.
FIG. 4 is a flowchart illustrating how incoming frames from the endoscopic camera are processed by the segmentation algorithm in accordance with one embodiment.
FIG. 5A shows an example of a segmented intraoperative frame with colored boundaries indicating different anatomical structures.
FIG. 5B shows an example depth-based measurement generated through stereoscopic imaging.
FIG. 5C shows an example of knee segmentation during arthroscopy.
FIG. 5D shows an example of abdominal segmentation.
FIG. 6 shows a detailed an encoder-decoder machine learning network in accordance with one embodiment.
FIG. 7 shows a flowchart of a network optimalization procedure in accordance with one embodiment.
FIG. 8 is a workflow diagram summarizing a representative endoscopic procedure in accordance with one embodiment.

### DETAILED DESCRIPTION OF THE EMBODIMENTS

The following detailed description is of the best currently contemplated modes of carrying out the invention. The description is not to be taken in a limiting sense, but is made merely for the purpose of illustrating the general principles of the invention.

Minimally invasive surgical procedures, particularly those involving the spinal column or other anatomically intricate regions, often require precise guidance to avoid critical structures and to ensure effective treatment. Traditional surgical navigation methods rely on external reference frames, fluoroscopy, or two-dimensional images, which can limit the surgeon's ability to accurately visualize deep or complex anatomy. Moreover, such methods typically offer static or near-static images that must be mentally correlated by the operator during the procedure.

One or more embodiments of the present invention address these limitations by providing a system and method for real-time imaging and segmentation of a patient's anatomy. In particular, the invention leverages an endoscope or integrated surgical instrument equipped with a camera (or cameras) and optional light source to capture live images of the operative field. These intraoperative images are analyzed through a machine learning system, such as an encoder-decoder type deep neural network, trained to identify, segment, and match anatomical structures in the captured images.

Beyond simply displaying the operative field, the disclosed system is designed to segment and measure critical anatomical features, offering clinicians quantitative data to guide surgical decision-making. In some embodiments, the same segmentation and positional data can be used for autonomous or semi-autonomous navigation, wherein a robotic controller adjusts instrument positioning based on real-time analysis of the patient's anatomy. As a result, surgical efficiency and accuracy are improved while the risk of inadvertent damage to delicate structures, such as nerves in the spinal canal, is reduced.

By employing multi-frame analysis, the system refines its spatial registrations, ensuring robust alignment even under challenging conditions such as partial occlusions, low lighting, or patient-specific anatomical variations. Furthermore, each new surgical procedure can optionally enhance the system's performance over time through continuous learning, wherein annotated intraoperative images are incorporated into the training dataset, further improving the accuracy of future navigation procedures.

While the primary focus herein is directed to spinal surgery, one or more embodiments of the invention can be adapted for use in other anatomical regions, such as the shoulder, elbow, hip, ankle or knee. By leveraging similar principles of endoscopic visualization and machine learning-based segmentation, clinicians can navigate these regions with similar benefits of real-time feedback and precise navigation.

The sections that follow describe the components, operation, and use cases of this navigation system in greater detail, emphasizing various hardware, software, and procedural embodiments. It is intended that the invention cover additional embodiments and variations, as would be apparent to those skilled in the art, in view of the disclosures set forth herein.

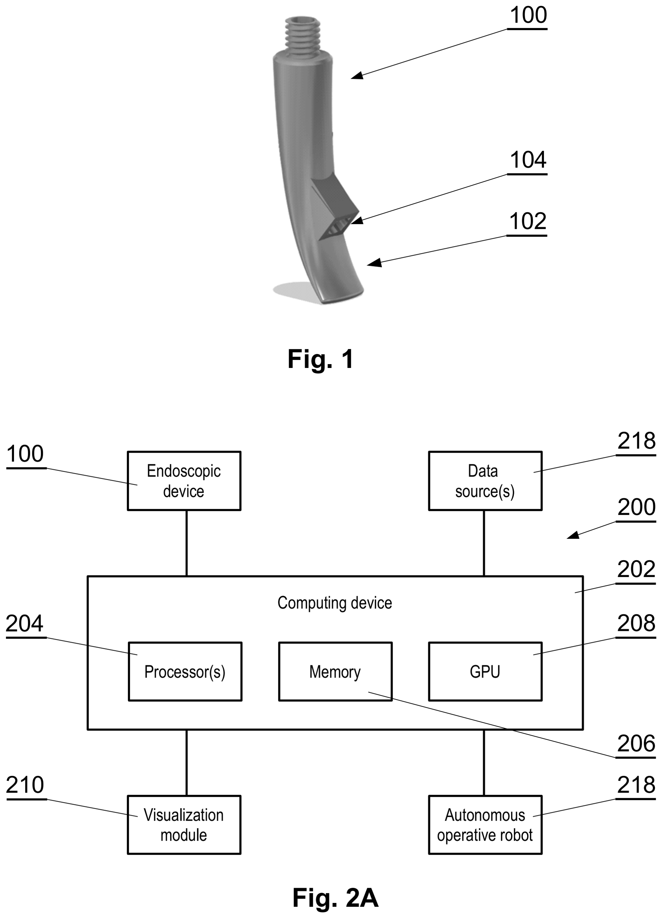

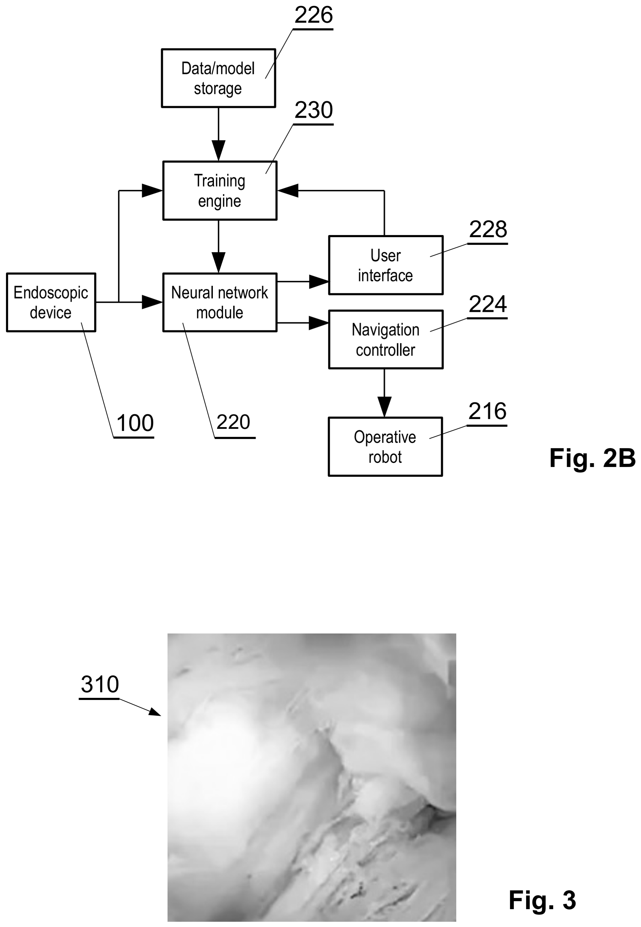

An overview of the system architecture and components will be explained with reference to FIG. 1 that illustrates an exemplary endoscopic instrument 100, and FIG. 2 that provides a high-level block diagram of the overall system architecture 200.

As shown in FIG. 1, the endoscopic instrument 100 includes a distal portion 102 designed for insertion into the patient's body (e.g., through the sacral hiatus or neural foramina) and a proximal portion manipulated by the surgeon or a robotic apparatus. The distal portion 102 comprises a vision module 104 combined with the body of the instrument, which may include one or more cameras having a field of view that covers the vicinity of the distal portion 102, as well as lighting directed toward that field of view. In certain embodiments, the vision module 104 houses two cameras 106L, 106R, arranged to capture stereoscopic image data for real-time depth estimation. This arrangement enables more accurate distance and location measurements of the observed anatomy.

The camera(s) may be a high-definition (HD) optical sensor or another suitable imaging device. In embodiments employing two cameras 106L, 106R, the system can generate a stereoscopic signal to derive depth information in the field of view. The light source can be one or more light-emitting diodes (LEDs), positioned adjacent to each camera to provide adequate illumination of the surgical field. In some embodiments, multispectral or infrared lighting is optionally included to enhance tissue differentiation if desired. When the distal portion 102 includes two cameras 106L, 106R, their outputs are combined by the computing device 202 to create a stereoscopic depth map, allowing the system to calculate the distance of each visible anatomical structure from the instrument 100. This stereoscopic approach can further refine the model matching process by providing additional spatial cues, improving the accuracy of instrument localization and tissue segmentation even in narrow or partially occluded regions of the operative field.

In further embodiments, the endoscopic instrument 100 takes the form of a surgical tool such as a 90° dissector, 90° ball probe, nerve hook, curved scissors, pituitary rongeur, Woodson dissector, Penfield dissector, or any other suitable device that combines a functional tip with the vision module 104. This configuration allows tissue manipulation and imaging to occur simultaneously, facilitating close monitoring of anatomical structures as they are dissected or retracted. Alternatively, the endoscope can be a standalone device introduced alongside one or more separate surgical instruments.

To facilitate passage into the spinal canal (or another target anatomy), the distal portion 102 of the endoscopic instrument 100 is typically slender and may include steering or angulation capabilities. Depending on the embodiment, the lens of the camera can be optimized for wide-angle viewing in the constrained surgical space. Although FIG. 1 depicts an exemplary configuration, numerous variations are possible - for instance, a smaller-diameter instrument may be preferred in pediatric or delicate contexts.

Turning to FIG. 2A, a hardware-level block diagram of the system architecture 200 is shown. A computing device 202 has one or more processors 204, memory 206, and optionally a graphics processing unit (GPU) 208 or other hardware accelerators for real-time image processing. The computing device 202 communicates with the other hardware components via wired or wireless connections. A visualization Module 210, such as a display screen 212, an augmented reality (AR) headset, or a virtual reality (VR) device, displays the real-time operative view and overlay annotations to the surgeon.

Optionally, the computing device 202 may be coupled with an autonomous operative robot 216 with a robotic manipulator or arm that can hold, position, or manipulate the endoscopic instrument 100 or other surgical tools and that receives control signals from the computing device 202 based on real-time navigation data.

The endoscopic device 100, as previously described with reference to FIG. 1, captures intraoperative images and transmits them to the computing device 202.

The system also comprises external data source(s) 218 that store or provide various patient-related data, such as preoperative 3D models derived from patient scans (e.g., CT, MRI). The data may be accessed locally or over a network, enabling the computing device 202 to retrieve and load the appropriate model for a given procedure.

Communication links in FIG. 2A indicate the flow of data among these hardware components. For instance, the endoscopic device 100 transmits live video to the computing device 202, which in turn processes the images and sends graphical overlays to the visualization module 210. If robotic assistance is enabled, the computing device 202 also sends control signals to the autonomous operative robot 216.

FIG. 2B illustrates the functional or software-level components within the system architecture 200. These modules typically execute on or in conjunction with the computing device 202, although some functionalities could be distributed across multiple devices or servers in a cloud environment.

A neural network module 220 implements the machine learning system. It receives image frames from the endoscopic device 100 and performs segmentation. An example of an image frame 310 before segmentation is shown in FIG. 3.

A navigation controller 224 uses positional and orientation data from the model matching module 222 to guide the user or an autonomous robot. For example, in autonomous embodiments, it may send operative instructions or motion commands to the autonomous operative robot 216. In manual modes, it may generate visual and/or audible prompts to be presented by the visualization module 210 to assist the surgeon in navigating the surgical field.

A data/model storage 226 is a repository (e.g., a database) for maintaining the 3D anatomical models, segmentation maps, and any intermediate or long-term data needed for training or refining the neural network module 220. It may also store patient records, procedure logs, or calibration data.

A user interface module 228 communicates with the visualization module 210 to render real-time overlays, color-coded segmentations, text-based alerts, or other user-friendly guidance. Integrates features such as measurement displays, highlighting of critical anatomy structures, and interactive controls for the operator.

A training and update engine 230 aggregates intraoperative data and user feedback for continuous learning or post-operative AI model refinement. It may operate offline or in the background to update the neural network module 220 with new cases or improved annotations.

In operation, the neural network module 220 processes each incoming frame from the vision module 104, returning segmentation results. The navigation controller 224 then uses this alignment data to display segmentation data to the surgeon (via the user interface module 228) or to control the autonomous operative robot 216. This real-time loop enables enhanced surgical navigation, whether fully manual, semi-autonomous, or robotic-controlled.

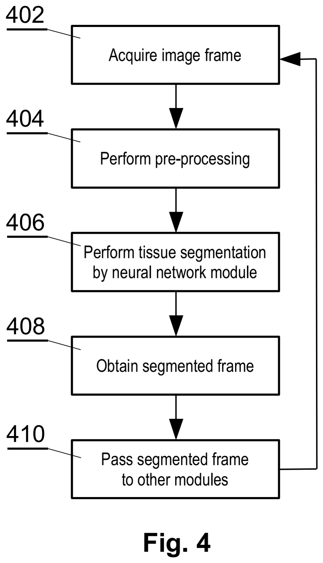

The system employs a machine learning approach to process real-time images captured by the endoscopic instrument 100, as detailed in FIG. 4.

In particular, the neural network module 220 is responsible for segmenting each incoming frame and generating labeled outputs. The primary steps in this process are described below. Referring to FIG. 4, at step 402, the system acquires a new frame from the endoscopic instrument 100. Preprocessing of the frame (e.g., noise reduction, color normalization) occurs at step 404, preparing the data for efficient handling by the encoder-decoder neural network. At step 406, the neural network module 220 applies a trained encoder-decoder architecture to perform tissue segmentation and extract relevant anatomical features. The resulting labeled (segmented) frame is obtained at step 408, preferably accompanied by confidence scores or bounding contours for each identified structure. In step 410, the labeled frame is then passed to the autonomous operative robot 216 and/or to the user interface module 228 and/or to the data storage 226. Finally, the workflow returns to step 402 to receive the next frame in a continuous loop.

The model used at step 406 typically follows an encoder-decoder neural network architecture (e.g., a U-Net variant), which allows efficient feature extraction across different spatial scales and subsequent upsampling to produce segmentation masks. While convolutional layers are commonly utilized within such encoder-decoder frameworks, the invention is not limited to strictly CNN-based models and may employ other deep learning paradigms. The GPU 208 in the computing device 202 can substantially reduce inference latency, ensuring that step 406 keeps pace with the real-time video stream.

The encoder-decoder network should be trained to handle environmental variability (lighting shifts, occlusions) likely to appear at step 402. Optional pre-processing at step 404 may include smoothing or color balancing to compensate for shadows or fluid in the field of view.

The neural network module 220 is trained on a diverse dataset comprising both real surgical footage and 3D-printed model imagery. For example, real surgical videos can be used to provide authentic anatomical variance and intraoperative complexity, while 3D-printed model footages offer consistent, controlled scenarios to reinforce basic shape recognition and augmentations.

During training, each frame is annotated with ground-truth labels. The system subsequently refines or updates these learned parameters post-operatively, or using data collected from other procedures. Such updates might be orchestrated by the optional training and update engine 230.

To prepare the training data for the neural network module, an annotated stream of images is generated. Each image in this stream includes labels identifying relevant anatomical structures. The stream is further divided into segments (also referred to as "scenes"), where a segment contains images that are substantially similar to each other because the endoscopic device remains stationary or moves only slightly during capture. This segmentation of the dataset helps manage redundancy, as consecutive frames in a stationary or near-stationary state often differ only minimally.

An important aspect of this workflow is that images from any single segment are dedicated exclusively to either training, validation or testing (i.e. to not more than one of them). By assigning each segment entirely to one set or the other, potential "data leakage" between training, validation and testing is reduced, thereby enhancing the reliability of performance metrics. This allocation process is recorded in an annotated file that flags which images, and their respective segments, belong to the specific subset (training/validation/testing). Consequently, the network can generalize more effectively, and testing scores more accurately reflect real-world performance in new procedures.

In some embodiments, the annotated data may be prepared manually, for example by having clinical experts label each anatomical structure in frame-by-frame images. Alternatively or additionally, the annotated data may be generated automatically when the endoscopic instrument is inserted into a known 3D model of the anatomy. In such automated methods, each new frame captured from the endoscopic instrument is virtually aligned or registered to the 3D model, enabling a software algorithm to infer and label visible structures based on the anatomical model's known geometry. This approach can reduce manual workload, help maintain consistency in annotations across large datasets, and accelerate the creation of high-quality training data for the neural network module.

The neural network module 220 may be configured to process single frames or multiple frames. In the single-frame scenario, each image may enter the encoder-decoder pipeline at steps 402-406 independently, enabling immediate segmentation of visible structures. In a multi-frame context, the system may aggregate consecutive labeled frames, reducing noise and improving reliability in challenging scenes (e.g., partial occlusions). Optional smoothing or filtering can be applied between steps 408 and 410, stabilizing segmentation masks over time and preventing flicker in the displayed overlay.

Thus, the procedure allows for real-time adaptability, as steps 402-406 are repeated at video frame rate, enabling continuous updates for navigation. By highlighting sensitive anatomical structures, the surgeon or robotic controller (if present) obtains precise information on current location and can avoid sensitive tissues.

In certain embodiments, the neural network can be trained primarily on single-frame images, yet operate on stereoscopic frames captured by the pair of cameras at the distal portion of the endoscopic instrument. Because the left- and right-camera images in a stereoscopic setup are highly similar, they can be fed to the trained model as a batch for simultaneous recognition. This batching approach not only leverages the network's single-image training but also enhances efficiency in real-time inference, since shared features and model weights can process both images concurrently. Consequently, the system retains the flexibility of straightforward single-image training while benefiting from the additional depth information and improved accuracy made available by two-camera stereoscopic imaging in live procedures.

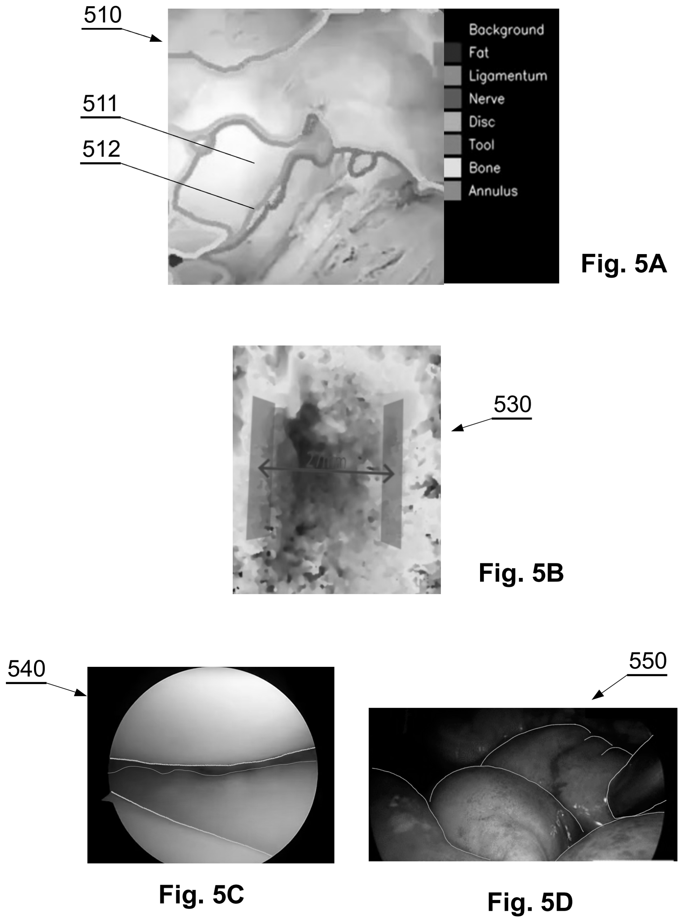

FIGS. 5A, 5B, 5C and 5D show an example user interface, which shows a segmented intraoperative frame 510 (FIG. 5A), with boundaries or color-coded structures 511 overlaid on the real image 512 (e.g., bone in white, disc in red, nerves in yellow). Moreover, FIG. 5B shows an example result 530 of operation of a stereoscopic camera, capable of determining distances between two anatomical structures. FIG. 5C shows an example result 540 of knee segmentation during arthroscopy and FIG. 5D shows an example of result 550 of abdominal segmentation.

The optional training and update engine 230 can record instances where misalignment occurred, using that data post-operatively to refine the matching algorithms or the neural network's segmentation accuracy.

In certain embodiments, the endoscopic instrument 100 acquires relatively low-resolution frames, on the order of 320×320 pixels per image. Such a resolution is advantageous because it substantially reduces the computational load, allowing the system to analyze each frame rapidly without compromising real-time requirements. Low-resolution frames also generate lower bandwidth demands, which can be critical when the endoscopic instrument 100 transmits data to the computing device 202 over a wired or wireless link in a constrained clinical environment.

Despite the reduced pixel count, the neural network module 220 is specifically configured and trained to accurately segment anatomical structures from these low-resolution images. This configuration may include using lightweight network architectures or specialized layers that preserve features in low-resolution images. Empirical results have shown that the neural network module 220 can robustly identify critical anatomical landmarks even when presented with frames of limited spatial resolution.

An additional challenge is that, due to the constrained surgical space and the surgeon's (or robotic manipulator's) frequent repositioning of the endoscopic instrument 100, the viewpoint can change significantly between successive frames. This rapid change in viewpoint means that the neural network module 220 must handle substantial variations in perspective, lighting, and visible anatomy. As such, the processing pipeline is optimized to adapt frame by frame, ensuring reliable segmentation results even under abrupt shifts in the endoscopic field of view.

To accommodate these rapid changes and maintain a continuous feedback loop for surgical navigation, the system aims for a minimal delay, on the order of a few milliseconds, between capturing each frame and displaying the segmentation results. This near-real-time performance is enabled by using efficient neural network architectures, GPU acceleration 208 in the computing device 202, and optimized input pipelines. The result is that surgeons or robotic controllers receive immediate visual and/or control feedback, thereby improving responsiveness and overall safety.

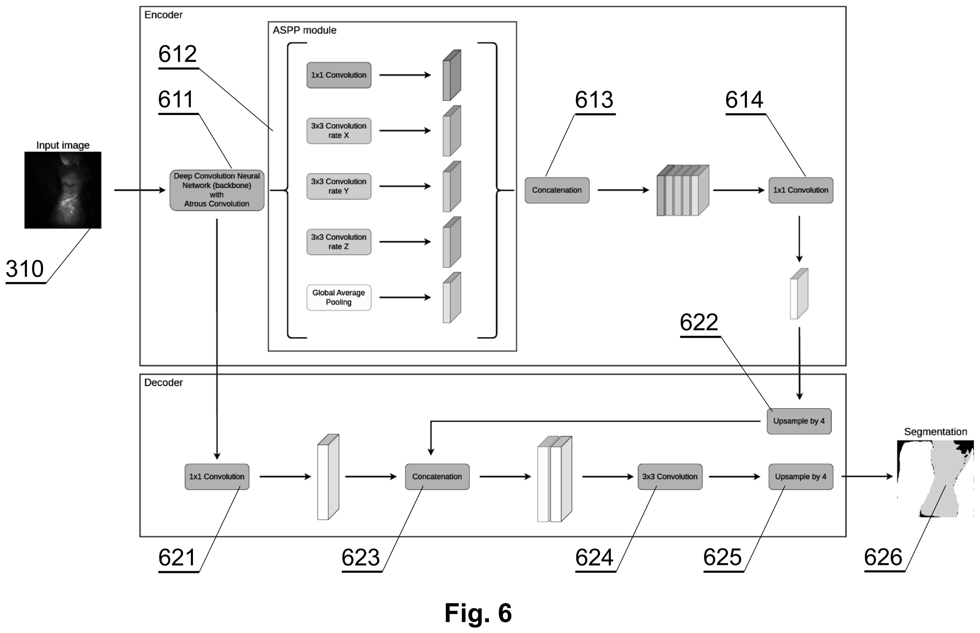

Referring now to FIG. 6, an exemplary neural network architecture 600 is shown, which may serve as the neural network module 220 in the present system. In this embodiment, the network is conceptually divided into two major parts: (i) an encoder portion (elements 611-614) for multi-scale feature extraction, and (ii) a decoder portion (elements 621-626) for restoring high-resolution spatial detail. This architecture is particularly well-suited for surgical applications where both local boundary precision and broader contextual understanding are critical for identifying complex or occluded anatomy in real time.

At the forefront of the encoder is a Deep Convolutional Neural Network (backbone) with Atrous Convolution, 611, which extracts low-level features from the input image. In various embodiments, this backbone may be a ResNet, Xception, or a similarly robust architecture, each layer progressively learning higher-level representations of the image content. During these early passes, the network preserves and temporarily stores low-level features that contain edges, fine textures, and other detail. This preserved detail is later retrieved in the decoder stage to ensure the final segmentation accurately reflects the true boundaries of each anatomical structure. While deep layers focus on abstract feature representations, maintaining access to the shallow layers facilitates precise delineation of small or closely adjacent tissue classes (e.g., bone versus nerve).

After passing through the backbone 611, the feature map is routed to an Atrous Spatial Pyramid Pooling (ASPP) module 612. The ASPP 612 applies parallel dilated convolutions at varying rates - standard convolution (rate = 1) as well as dilations at preset larger rates - all alongside a global average pooling branch for capturing context at an even broader scale. By merging these parallel features, the network effectively "zooms in and out" on key regions of interest, accounting for both localized textures and the larger anatomical arrangement. This multi-scale approach proves especially beneficial in endoscopic views, where lighting, occlusion, and the proximity of tissues can change rapidly as the surgeon navigates tight spaces.

Next, a concatenation block 613 merges the outputs from the ASPP's parallel branches, aggregating multi-dilated features into a unified tensor. Subsequently, a 1×1 convolution at reduction block 14 reduces the overall feature dimensionality, simplifying downstream processing without discarding the critical multi-scale insights gained from the ASPP 612. At this point, the encoder portion of the network has produced a robust, context-rich representation of the endoscopic image - one that captures spatially fine details as well as broader cues regarding anatomical layout.

Moving into the decoder portion of the network, a convolution block 621 retrieves the earlier, low-level feature maps from the backbone 611 and applies a 1×1 convolution to reduce the number of channels. This channel-reduction step aligns these fine-detail features with the dimensionality of the ASPP-processed output. In parallel an upsampling block 622 upsamples the encoder's aggregated feature map by a factor of four, for example via bilinear interpolation or a similar technique, to bring the feature resolution closer to that of the low-level features. Such upsampling is key in reintroducing important spatial details that may have been compressed in the deeper layers of the encoder.

In a concatenation block 623, the upsampled high-level features are concatenated with the processed low-level features. This fusion explicitly combines the localized structural clues (edges, fine textures) with the contextual panorama derived from the outputs of the ASPP 612. Thereafter, a convolution block 624 applies a 3×3 convolution to refine these merged features, smoothing out segmentation boundaries and helping the network better distinguish between adjacent tissues with similar color or texture, such as ligaments and nerves.

Completing the decoder, an upsampling block 625 upsamples the refined feature maps again, for example by a factor of four, restoring the resolution to match that of the original input frame. Finally, a segmentation element 626 predicts class logits on a per-pixel basis, effectively generating the segmentation mask for the anatomy in view. A subsequent softmax or comparable activation then normalizes these logits to yield a probability distribution of possible anatomical labels at each pixel.

By uniting global context awareness with the ability to preserve and recover highfrequency details, the encoder-decoder architecture 600 shown in FIG. 6 delivers highly accurate and fine-grained semantic segmentations suited to surgical applications. This combination of multi-scale feature extraction (encoder) and boundary-aware reconstruction (decoder) plays a pivotal role in ensuring critical structures, such as nerves, bone edges, and vascular tissues, are distinguished reliably, even when lighting conditions or viewpoints fluctuate. Consequently, the described approach is well-equipped to provide robust, near-real-time feedback for surgeons and robotic systems alike, supporting the objectives of the present invention by enhancing intraoperative visualization and reducing the risk of iatrogenic injury.

In addition to the specific encoder-decoder architecture described with reference to FIG. 6, the neural network module 220 may employ various other types of neural networks suitable for semantic segmentation tasks. For instance, classic semantic segmentation networks, designed specifically for identifying and labeling regions of interest in an image, can be advantageously applied to real-time surgical video streams. In such networks, feature extraction may occur at multiple scales or resolutions, enabling the system to combine detailed local cues with broader contextual information for more robust anatomical identification. This multi-scale processing allows the model to handle challenging conditions, such as occlusions, variable lighting, or rapidly changing viewpoints, by attending to both fine structural details (e.g., the margin between bone and nerve) and the larger anatomical context (e.g., surrounding tissue layers).

A particularly effective class of architectures employs an encoder-decoder structure, in which the encoder progressively reduces image resolution to extract increasingly abstract features, and the decoder then rebuilds resolution, leveraging feature aggregation mechanisms to preserve spatial detail. In many cases, skip connections are inserted to bypass information from encoder layers directly into corresponding decoder layers, which greatly aids in retaining high-resolution details and stabilizing training. Such bypass or skip connections also help mitigate the risk of overfitting, since they maintain a flow of earlier, lower-level features to deeper parts of the network. Further performance gains may be achieved through a pyramid linking module (sometimes referred to as a feature pyramid), which processes extracted features at multiple resolutions and combines them in a way that captures overall context while preserving local detail. This design ensures that the network can learn to "zoom out" for anatomical layout while "zooming in" to correctly label small, but critical structures in the operative field.

Another advantage of the described architecture is that the encoder portion of the network can be "swapped out" to find the most suitable one for the specific surgical environment and computational constraints. Different backbone architectures, such as ResNet, MobileNet, Xception, or EfficientNet, offer varied trade-offs between speed, memory usage, and feature representation quality. In some procedures, a lightweight backbone may be desirable to ensure real-time performance on hardware with limited resources, whereas in other contexts, a more computationally intensive backbone with deeper layers may yield finer-grained anatomical distinctions. By evaluating various backbone configurations under realistic surgical conditions, the system can be tailored to achieve an optimal balance between accurate segmentation and rapid inference. This modular approach also extends the system's longevity, as newer or more specialized backbones can be integrated in the future with minimal changes to the rest of the pipeline.

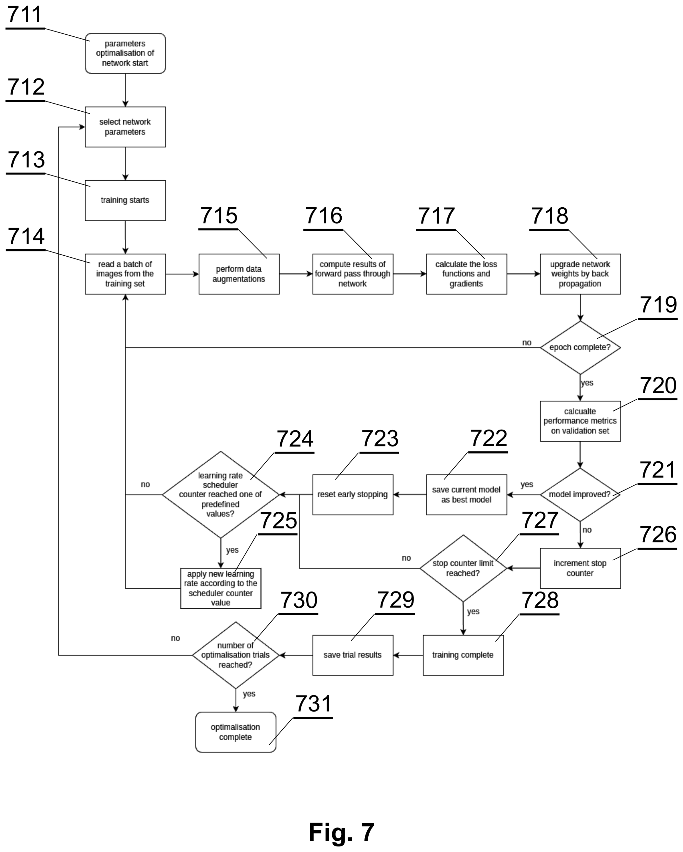

FIG. 7 illustrates an exemplary optimization procedure for training the neural network models described in the present disclosure. Beginning at step 711, the system initiates the parameter optimization process by loading or initializing the network configuration. From there, in step 712, it selects the applicable network hyperparameters, which may include the choice of backbone architecture, initial learning rate, batch size, and the number of epochs to run. Once the network parameters are chosen, training commences at step 713. In step 714, the system reads a batch of images from the training set; at step 715, it applies data augmentation techniques such as random rotations, flips, or color jitter to enhance the robustness of the model. Next, in step 716, the augmented batch passes forward through the neural network to compute segmentation predictions. These predictions are evaluated in step 717, where the system calculates the loss function, for example a segmentation-specific metric such as cross-entropy or Dice loss, and derives gradients via backpropagation. At step 718, the model weights are updated accordingly. The procedure then checks in step 719 whether the current training epoch is complete. If not, the system returns to step 714 to process the next batch; otherwise, at step 720, it assesses performance on a validation set, computing metrics such as accuracy, recall, precision, or IoU Intersection over Union that help gauge the model's generalization quality. In step 721, the system compares the updated model's performance against previous best results. If an improvement is detected, step 722 saves the current model as the best-performing version so far. At step 723, it resets any counters associated with early stopping or other convergence criteria. The procedure next moves to step 724, where it checks whether a pre-defined threshold has been reached in the learning rate scheduler. If not, training returns to step 714 for the next batch. If the threshold is met, step 725 applies a new learning rate according to the scheduler's parameters, reducing the learning rate to refine training. The procedure then resumes from step 714. If the model fails to improve at step 721, step 726 increments a stop counter, which tallies consecutive epochs without measurable progress. In step 727, if this counter exceeds a preset limit, the procedure halts training at step 728; if not, it proceeds to step 724 and continues as before. At the completion of each training run, step 729 saves a record of the trial results, such as final metrics, best-performing weights, and any relevant hyperparameter details. Finally, in step 730, the system determines whether the set number of optimization trials has been exhausted. If additional trials remain, it returns to step 712 with new parameter selections. Otherwise, at step 731, the overall optimization sequence concludes, and the system records the best-performing model for subsequent deployment or integration into the surgical navigation system.

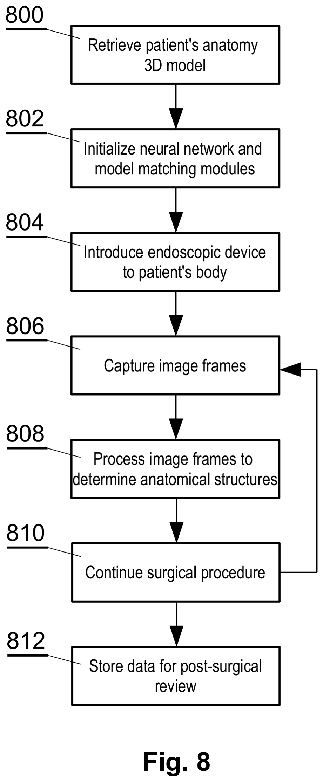

The system described above can be used in an exemplary surgical workflow to guide an endoscopic procedure in real time. Referring to FIG. 8, this workflow can be conceptually divided into initialization, image capture and processing, navigation feedback, and completion. While the example below focuses on spinal surgery, similar principles apply to other anatomical targets (e.g., shoulder, elbow, hip, ankle or knee). As shown in FIG. 8, the surgical procedure typically proceeds through the following steps. In step 800, the computing device 202 retrieves the patient's preoperative 3D anatomy model from the external data source 218 or from local data/model storage 226. In step 802, various modules, including the neural network module 220, are initialized and configured. In step 804, the endoscopic instrument 100 is introduced into the patient's body (e.g., via the sacral hiatus), ensuring that the vision module 104 has a clear operative view. In step 806, live image frames from the camera are sent to the computing device 202, triggering the real-time analysis pipeline. Next, in step 808 the neural network module 220 processes each frame to identify and label anatomical structures, leveraging pretrained models as discussed with reference to FIG. 4. Based on the real-time segmentation, the surgeon or robot manipulates instruments to perform the specific procedures in step 810, continuously receiving updated and anatomical cues. Once the procedure is finished, the system stores, in step 812, relevant data (e.g., video footage, instrument trajectories) for post-operative review or future training updates.

This procedure allows surgeons to benefit from a continuous overlay of live images and segmentation data, enhancing decision-making. Robotic or semi-autonomous procedures can leverage real-time anatomical matching to reduce errors and improve reproducibility. Moreover, by logging each procedure's data, future training can refine segmentation accuracy (neural network module 220).

The neural network typically is trained to recognize anatomical structures once the endoscopic instrument is inside the relevant anatomy. Accordingly, when the surgeon first inserts the endoscopic instrument at the beginning of a procedure, it may not be immediately clear to the system that the tool has reached its target position. Various approaches can be employed to determine the "start" of real-time segmentation. One approach is manual initiation by the surgeon or operator: once the tip of the instrument is placed within the operative region, the surgeon triggers the system to begin analyzing images and displaying segmentation results. In another approach, the neural network module begins processing frames continuously from the moment the system is activated (even when the instrument is still outside the target anatomy), but the output is displayed to the user only once the algorithm detects reliable recognition of anatomical features over a sufficient number of consecutive frames.

In still another embodiment, a predefined expected sequence of early images can be used to confirm instrument positioning. For example, in a spinal procedure, the system may look for characteristic features-such as bony landmarks on opposite sides of the field and an intervening intervertebral disc-to conclude that the instrument is in the correct location. Upon matching these landmarks consistently, the segmentation results can be enabled for display, giving the surgeon real-time anatomical overlays once the system is confident that the relevant anatomy has been reached.

While the foregoing sections describe a system particularly suitable for spinal surgery, numerous alternative embodiments and extensions of this invention may be realized without departing from the inventive concepts disclosed herein. For example, arthroscopic procedures could benefit from the same real-time image segmentation and model matching, aiding in rotator cuff repair or labral tear surgery. Similarly, endoscopic or arthroscopic instruments fitted with a vision module 104 can help surgeons navigate narrow joint spaces and preserve neurovascular structures. Furthermore, in procedures such as meniscal repair or anterior cruciate ligament (ACL) reconstruction, intraoperative endoscopic images can be aligned with a 3D model of the femur, tibia, and menisci. Moreover, with some adaptations (e.g., a narrower or angled endoscope), the system may be employed for endonasal approaches in neurosurgery or otolaryngology, aligning real-time views of sinus or skull base anatomy to a corresponding 3D model.

In some embodiments, two or more surgical instruments can be simultaneously tracked. If additional endoscopes or cameras are introduced, each feed can be processed via separate instances of the neural network module 220 or via a shared framework, providing complementary viewpoints of the surgical field. In certain configurations, rather than introducing multiple endoscopes, a single endoscopic instrument 100 may incorporate two cameras 106L, 106R for stereoscopic visualization, enabling real-time depth perception and enhanced spatial accuracy.

A robotic manipulator 216 may control one instrument autonomously, while a surgeon manually operates another. The navigation controller 224 can ensure that movement paths are coordinated to avoid collisions and maintain clear visualization.

Although the disclosed embodiments focus on optical endoscopic imaging, the invention can be adapted to integrate or fuse data from additional imaging modalities. For example, a miniaturized ultrasound probe may be combined with or mounted alongside the vision module 104, providing soft tissue detail not always discernible in conventional white-light endoscopy. Furthermore, intraoperative fluorescence markers can help distinguish vascular or malignant tissue, feeding the neural network module 220 for more precise segmentation in certain oncologic or vascular procedures.

In advanced deployments, the system may integrate with electronic health records (EHR) and other clinical data systems. Preoperative planning data (e.g., desired fusion level, specific resection margins) can be annotated in the segmented images. Data logged from each procedure (e.g., instrument paths, duration, outcomes) can be used to generate metrics for quality improvement and to refine future training datasets.

Although the preceding sections have presented the system in a general manner, the following examples highlight specific procedures and workflows, illustrating how the invention can be employed in real or simulated clinical settings. These examples are illustrative in nature and not intended to limit the scope of the claims.

### Example 1: lumbar decompression surgery

The patient undergoes a lumbar spine MRI. The neural network module 220 is initialized with the relevant trained neural network model parameters for spinal tissue recognition. The surgeon introduces a Penfield-type endoscopic instrument 100 (with vision module 104) through the sacral hiatus. Live images are captured and forwarded to the computing device 202, where each frame is preprocessed and then segmented by the neural network module 220. The navigation controller 224 overlays real-time segmentation outlines onto the user's display (visualization module 210), as the surgeon approaches to the targeted decompression site (e.g., L4-L5 level). The surgeon, aided by clearly visualized nerve roots and bony landmarks, removes compressive tissue while avoiding critical neural structures. Any changes in orientation are instantly reflected in the displayed overlay, allowing continuous instrument tracking and reducing the need for fluoroscopic guidance. At the conclusion, procedure data - instrument trajectories and frame-by-frame segmentation logs - are stored in data/model storage 226 for post-operative review and possible future re-training.

### Example 2: arthroscopic shoulder repair

In this scenario, the same system architecture is adapted for shoulder arthroscopy. A smaller-diameter endoscope 100 with an angled distal portion 102 is employed to visualize the glenohumeral joint. During the surgery, frames captured by the vision module 104 depict the arthroscopic view of the joint. The neural network module 220 recognizes cartilage, tendon, and capsular tissues. As the surgeon manipulates the instrument, the navigation controller 224 continuously updates the overlay on the display, showing the instrument's position relative to critical anatomical landmarks (e.g., the supraspinatus tendon). A robotic suture passer (optionally controlled by the system) may assist in placing sutures precisely where rotator cuff tears are identified. The integrated overlay minimizes misplacement of anchors or sutures, thus enhancing repair accuracy.

While the invention has been described with respect to a limited number of embodiments, it will be appreciated that many variations, modifications and other applications of the invention may be made. Therefore, the claimed invention as recited in the claims that follow is not limited to the embodiments described herein.

## Claims

1. A method for real-time surgical navigation, comprising:
capturing an intraoperative image stream from a distal portion of an endoscopic instrument inserted into a patient's body;
processing the intraoperative image stream with a machine learning-based segmentation algorithm configured to identify anatomical structures; and
outputting segmentation data indicating the anatomical structures within the image stream.

2. The method of claim 1, wherein the machine learning-based segmentation algorithm is an encoder-decoder neural network that comprises an encoder portion for extracting feature maps from each image frame and a decoder portion for reconstructing a segmented output identifying specific anatomical structures.

3. The method of claim 2, wherein the encoder portion of the encoder-decoder neural network includes an atrous spatial pyramid pooling module configured to capture multi-scale contextual information by applying dilated convolutions at different rates, and preferably wherein skip connections are provided between corresponding layers of the encoder portion and the decoder portion to preserve high-resolution spatial features and improve boundary delineation of anatomical structures, and preferably wherein the decoder portion of the encoder-decoder neural network comprises a first upsampling block that restores feature map resolution to a fraction of an original input image size, and a second upsampling block that restores feature map resolution to the original input image size, thereby enabling real-time segmentation of low-resolution frames without significant loss of detail.

4. The method of claim 2 or 3, wherein the encoder-decoder neural network is trained on a multi-stage dataset allocation scheme that groups consecutive frames from stationary endoscopic views into segments and assigns each segment exclusively to either training, validation, or testing.

5. The method of any of claims 2-4, wherein the encoder-decoder neural network is configured to accept paired stereoscopic images as input in a batched manner, leveraging shared model weights to perform simultaneous segmentation of both images for improved depth-aware analysis.

6. The method of any of previous claims, further comprising acquiring stereoscopic image data from two cameras located at the distal portion of the endoscopic instrument and using the stereoscopic image data to estimate a depth map of an operative field and preferably further comprising using the depth map to measure at least one of: a distance between the endoscopic instrument and a selected anatomical landmark, an angle or orientation of the endoscopic instrument relative to anatomy, or a real-time volume of an anatomical structure.

7. The method of any of previous claims, further comprising controlling, via a robotic manipulator, a position or orientation of the endoscopic instrument in response to the segmentation data, thereby enabling semi-autonomous or autonomous navigation within a patient's anatomy.

8. The method of any of previous claims, further comprising storing segmented frames for post-operative review, wherein the stored data are used to retrain the machine learning-based segmentation algorithm and improve its accuracy over subsequent procedures.

9. The method of any of previous claims, further comprising displaying a color-coded overlay of identified anatomical structures on a monitor or head-mounted display to provide real-time visual feedback to a surgeon or operator during navigation.

10. The method of any of previous claims, wherein the endoscopic instrument comprises a surgical tool selected from the group consisting of a dissector, nerve hook, rongeur, scissors, or ball probe.

11. The method of any of previous claims, wherein the machine learning-based segmentation algorithm is trained on a dataset combining real surgical images and synthetic images obtained from physical or virtual three-dimensional printed anatomical models.

12. A system for real-time surgical navigation, the system comprising:
an endoscopic instrument having a distal portion configured to capture an intraoperative image stream via an imaging module;
a computing device including one or more processors, memory, and optionally a graphics processing unit;
a machine learning-based segmentation module stored in the memory, the module being adapted to identify anatomical structures in the intraoperative image stream; and
an output interface that provides segmentation data indicating the anatomical structures within the image stream.

13. The system of claim 12, wherein the endoscopic instrument comprises two cameras at the distal portion for stereoscopic imaging, enabling the computing device to estimate a depth map of an operative field.

14. The system of claim 12 or 13, further comprising a robotic manipulator communicatively coupled to the computing device, wherein the segmentation module provides data to the robotic manipulator to enable semi-autonomous or autonomous positioning of the endoscopic instrument.

15. The system of any of claims 12-14, further comprising a user interface module adapted to display a real-time overlay of segmented anatomical structures on a visualization module and to output navigational prompts or warnings.
